# EUROPÄISCHE PATENTSCHRIFT

(11) **EP 0 808 678 B1**
(45) Veröffentlichungstag und Bekanntmachung des Hinweises auf die Patenterteilung: **27.10.1999**
(21) Anmeldenummer: 97107957.9
(22) Anmeldetag: 15.05.1997
(51) Int. Cl.: B21D 53/26, F16H 55/44

(54) **Verfahren und Vorrichtung zum Herstellen einer Poly-V-Scheibe**
Method and apparatus for making a poly-v-pulley
Méthode et dispositif pour le fabrication d'une poulie à gorges multiples

(30) Priorität: 20.05.1996 DE 19620178
(43) Veröffentlichungstag der Anmeldung: 26.11.1997
(73) Patentinhaber: Leico GmbH & Co. Werkzeugmaschinenbau, 59229 Ahlen, Westf. (DE)
(72) Erfinder: Temmann, Robert, 59387 Ascheberg (DE)
(74) Vertreter: Lang, Friedrich, Dipl.-Ing.

(56) Entgegenhaltungen:
- EP-A- 0 517 572
- EP-A- 0 552 776
- DE-A- 19 620 178
- JP-A- 60 184 438
- JP-A- 63 108 937
- US-A- 4 050 321

## Beschreibung

Die Erfindung betrifft ein Verfahren zum Herstellen einer Poly-V-Scheibe mit einem integrierten Geber gemäß dem Oberbegriff des Anspruchs 1 sowie eine Drückmaschine, welche insbesondere zur Durchführung des Verfahrens geeignet ist, gemäß dem Oberbegriff des Anspruchs 9.

Ein gattungsgemäßer Stand der Technik geht aus der EP-A-0 552 776 hervor. Durch radiales Zustellen einer stufenförmigen Drückrolle an eine topfförmige Vorform wird ein durchmesserkleinerer Bereich für ein Poly-V-Profil und gleichzeitig ein durchmessergrößerer Bereich für eine Geberverzahnung gebildet.

Bei dem Verfahren nach der EP-A-0 517 572 wird eine Ronde in ein Werkzeugfutter radial hineingestaucht, wobei in einen Spalt zwischen einer Drückrolle und dem Futter Material radial nach außen fließt, um einen Steg zu bilden. Dieser radiale Steg wird in einem Pressenwerkzeug zu einer Geberverzahnung umgeformt.

Ein weiteres Verfahren zur Herstellung einer Riemenscheibe ist in der DE-C2-30 42 312 beschrieben. Aus einem Metallblech wird eine Ronde ausgestanzt und eine topfförmige Vorform, z.B. durch Tiefziehen oder Drücken, hergestellt. Die topfförmige Vorform mit einem radialen Nabenbereich und einem dazu nahezu senkrecht und koaxial zu einer Längsachse ausgebildeten zylindrischen Bereich weist eine einheitliche Wandstärke auf. Die Vorform wird in eine Drückvorrichtung eingespannt und der zylindrische Bereich unter Abstützung auf einen zentrisch gelagerten Block einem Axialdruck ausgesetzt, um ein "teilweises Kollabieren", d.h. ein radiales Ausbauchen von innen nach außen, zu erreichen. Eine angestrebte Materialanhäufung zur Ausbildung eines Rillenbettes wird somit durch eine Verkürzung des zylindrischen Bereiches möglich. Die Ronde bzw. der zylindrische Bereich der topfförmigen Vorform müssen deshalb mit einer entsprechenden Länge ausgebildet sein.

Die radiale Ausbauchung soll durch Walzen eines Walzenpaares erreicht werden, welche axial zueinander beweglich sind und aneinanderliegend eine etwa kreisbogenförmige Ausnehmung definieren. Bei dem axialen Zusammenpressen kollabiert das Material des zylindrischen Bereiches in diese Ausnehmung hinein. Mit Hilfe entsprechend ausgebildeter Abstützbereiche werden vor oder während des axialen Zusammenpressens und Kollabierens außerdem ein Innenflansch zwischen dem Nabenbereich und dem zylindrischen Bereich sowie ein Außenflansch am freien Ende des zylindrischen Bereiches gebildet, welche radial nach außen gerichtet sind.

Danach wird der kollabierte zylindrische Bereich flachgedrückt, wobei eine Materialverdickung entsteht. Mit Hilfe einer Profilwalze und eines zentrischen Abstützblockes sowie begrenzender Spann- und Druckfutterhälften wird eine V-förmige Profilierung des verdickten Bereiches vorgenommen.

Dieses Verfahren ist insbesondere in maschinentechnischer Hinsicht aufwendig und mit entsprechenden Fertigungskosten verbunden.

Bei einem in der EP-B-0 343 314 beschriebenen Verfahren wird unmittelbar auf eine Metallronde eine Bordierrolle radial zugestellt, ohne eine topfförmige Vorform auszubilden. Die Bordierrolle weist eine halbkreisförmige Ausnehmung auf und bewirkt ein entsprechendes Einrollen des Rondenrandes. Danach wird mit einer Drückrolle aus der Bordierung ein zylindrischer Wandbereich mit einer Wandstärke gebildet, welche größer ist als die des Nabenbereichs. Bei diesem Verfahren können ein Innenflansch und ein Außenflansch erst nach dem Flachdrücken ausgebildet werden. Die Herstellung von Poly-V-Riemenscheiben mit einem Geber an einem Außenflansch ist nicht möglich.

Der Erfindung liegt die **Aufgabe** zugrunde, ein effizientes Verfahren zur Herstellung einer Poly-V-Scheibe mit einem Geber zu schaffen, welches in einer Drückvorrichtung mit Werkzeugwechslern und in einer Aufspannung durchführbar ist, und eine Vorrichtung anzugeben, welche insbesondere zur Durchführung des Verfahrens geeignet ist.

Erfindungsgemäß wird die Aufgabe bezüglich des Verfahrens durch die Merkmale des Anspruchs 1 und bezüglich der Vorrichtung durch die Merkmale des Anspruchs 9 gelöst. Zweckmäßige und vorteilhafte Ausgestaltungen sind in den Unteransprüchen und in der Figurenbeschreibung enthalten.

Die Erfindung basiert auf dem Grundgedanken, einen asymmetrisch verstärkten bzw. verdickten zylindrischen Bereich zu bilden.

Ein wesentlicher Grundgedanke besteht darin, eine Materialanhäufung und Ausbildung eines verdickten Rillenbettes mit einer optimalen Wandstärke durch eine Verringerung des Durchmessers des zylindrischen Bereiches zu erreichen. Die asymmetrischen Verdickungen und die Durchmesserverringerung werden in einer besonders vorteilhaften Weise zur Ausbildung eines integrierten Gebers mit einer Innen- und/ oder Außenverzahnung kombiniert.

Die Vorteile des erfindungsgemäßen Verfahrens und der Vorrichtung sind eine einzige Aufspannung und Anwendung definiert ausgebildeter Spannfutterhälften. Diese wirken zur Ausbildung der Materialanhäufungen und Verdickungen mit ausschließlich radial zustellbaren Drück- oder Stauchrollen zusammen. Besonders vorteilhaft ist die integrierte Geberausbildung an einem Außenflansch. Durch diese integrierte Geberausbildung wird eine Verringerung der Fertigungskosten erreicht.

Verfahren und Vorrichtung werden nachstehend anhand eines Ausführungsbeispiels weiter erläutert; in der zugehörigen Zeichnung zeigen in einer stark schematisierten Darstellung
- Fig. 1: eine in einer Drückmaschine aufgespannte, angekippte Metallronde;
- Fig. 2: einen Metalltopf mit einem verdickten zylindrischen Bereich und mit einer radial zugestellten Drückrolle mit Abstützung oder Vorsprung;
- Fig. 3: einen Metalltopf nach einer Durchmesserverringerung mit Ausbildung einer Verdickung und eines Außenflansches mit Verdickung am zylindrischen Bereich und radial zugestellte Drückrolle;
- Fig. 4: einen Metalltopf mit einer Vorprofilierung und einen vorgeformten Innenflansch und Außenflansch sowie Vorprofilierungsrolle;
- Fig. 5: eine Poly-V-Profilierung und einen endverformten Innenflansch sowie Außenflansch mit Verdickung, und
- Fig. 6: eine Poly-V-Riemenscheibe mit Geber und Verzahnung und mit radial zugestellter Drückrolle und einem Drückdorn.

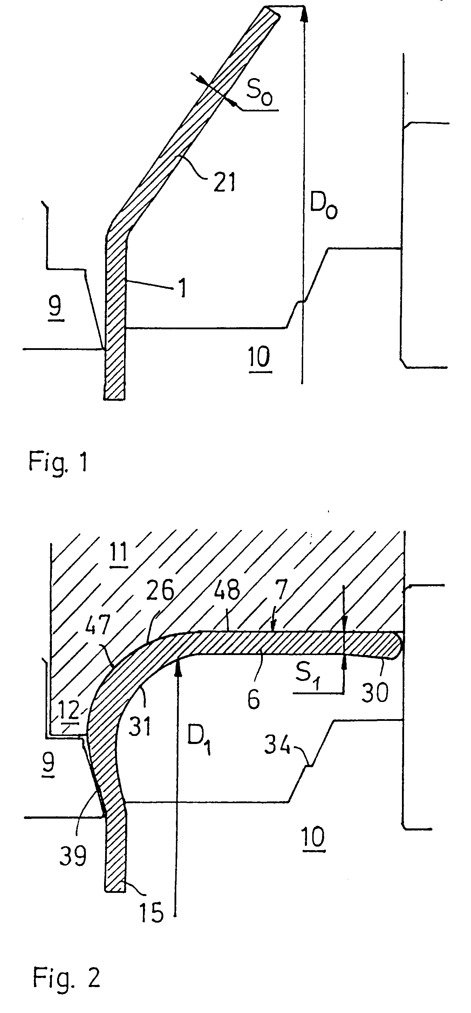

Die Fig. 1 bis 6 zeigen die Fertigung einer Riemenscheibe 2, welche eine Poly-V-Profilierung 3 zur Aufnahme eines Keilrippenriemens mit V-förmigen Rillen sowie einen integrierten Geber 4 mit Verzahnung aufweist.

Die Fertigung erfolgt in einer Drückvorrichtung bzw. Drückmaschine in einer Aufspannung und mit Werkzeugwechslern durch nacheinander zustellbare Drück- bzw. Stauchrollen, Profilierrollen und Verzahnungsrollen.

In einer bevorzugten Herstellung wird von einer angekippten Metallronde 1 ausgegangen, welchen einen abgeschrägten oder abgewinkelten Randbereich 21 mit einer definierten Länge und einer definierten Wandstärke So aufweist. Die angekippte Metallronde 1 mit einem Durchmesser Do kann durch Fressen oder auch in einer Drückmaschine hergestellt werden. Fig. 1 zeigt die zwischen Spannfutterhälften 9, 10 eingespannte angekippte Metallronde 1.

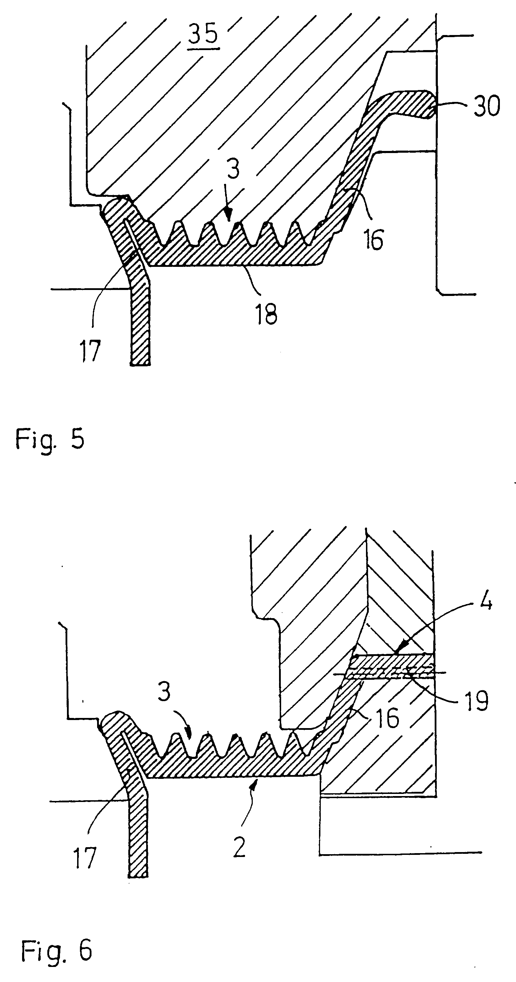

Alternativ kann auch von einer Metallronde mit einem vorgegebenen Durchmesser ausgegangen werden, welche mit Hilfe einer Drück- und Stauchrolle definiert angestaucht und mit einem gestauchten, verdickten Rondenrand sowie mit einem verdickten Endbereich aufgrund einer Materialverlagerung und/oder -verdrängung versehen wird. Die definierte Ausbildung einer angestauchten Metallronde erfolgt z.B. mit einer Drück- bzw. Stauchrolle, welche eine asymmetrisch ausgebildete Ausnehmung sowie einen Vorsprung aufweist, welcher mit einer Spannfutterhälfte zusammenwirkt. Der verdickte Endbereich des angestauchten Rondenrandes ist zur Ausbildung eines Gebers 4 (Fig. 6) mit Innen- und/ oder Außenverzahnung vorgesehen. Der gestauchte Rondenrand und der verdickte Endbereich werden durch eine gezielte Stauchung und Materialverlagerung mit Hilfe der Drück- bzw. Stauchrolle gebildet. Indem deren asymmetrisch ausgebildete Ausnehmung eine nahezu vertikale Stauwand aufweist, welche eine etwa schräg nach außen gerichtete Drückwand begrenzt, werden eine Materialververdrängung und -verschiebung begrenzt. Die hervorgerufene Materialansammlung in der Ausnehmung führen zu dem gestauchten verdickten Rondenrand mit verdicktem Endbereich.

In Fig. 2 ist ein mit Hilfe einer Drückrolle 11 aus der angekippten Metallronde 1 gemäß Fig. 1 umgeformter Metalltopf 7 gezeigt. Die Drückrolle 11 ist mit einer Ausformung 12, welche mit der Spannfutterhälfte 9 zusammenwirkt, und mit einer asymmetrisch angeordneten und ausgebildeten Vertiefung 47 sowie einem weitgehend horizontalen Bereich 48 versehen und gewährleistet die Ausbildung einer Verdickung 31 oberhalb des radialen Nabenbereichs 15 sowie eines zylindrischen Bereiches 6 mit einer Wandstärke S1. Fig. 2 verdeutlicht, daß ein dickerer Endbereich 30 ausgebildet wird, wenn die Drückrolle 11 und die Spannbackenhälfte 10 die Topfumformung außenseitig begrenzen.

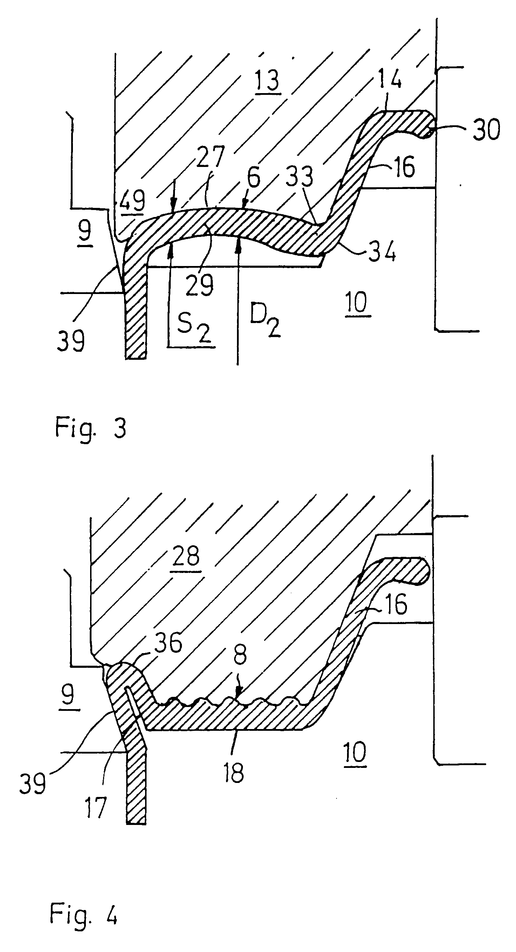

Die Verdickung 31 wird durch eine Materialverlagerung in einer etwa bogenförmigen Ausnehmung der Drückrolle 11 und insbesondere in einem vertieften Bereich 47 zwischen der Ausformung 12 und dem horizontalen Bereich 48 hervorgerufen. Ein abgeschägter Spannbereich 39 der Spannfutterhälfte 9 führt gleichzeitig zu einer Abschrägung des radialen Nabenbereiches 15, welche für die Ausbildung eines Innenflansches 17 (Fig. 4) genutzt wird.

Fig. 3 verdeutlicht eine weitere Materialanhäufung und Verdickung des zylindrischen Bereiches mit 6 Hilfe einer asymmetrischen Drückrolle 13. Die Drückrolle ist in einem axial begrenzten Bereich bevorzugt zylinderförmig (nicht dargestellt) ausgebildet. Im vorliegenden Ausführungsbeispiel ist die Drückrolle 13 gering konkav gewölbt und weist einen außermittigen Vorsprung 33 auf. Dieser Vorsprung 33 wirkt mit einer Stufe 34 der Spannfutterhälfte 10 zusammen und führt zu einer Materialanhäufung 29 in der konkaven Ausnehmung 27 der Drückrolle 13 infolge einer Durchmesserreduzierung auf einen Durchmesser D2 des zylindrischen Bereiches 6 sowie zur Ausbildung eines Außenflansches 16 mit dem verdickten Endbereich 30. Der außenflanschseitige Vorsprung 33 sowie ein nabenseitiger bzw. innenflanschseitiger Vorsprung 49 begrenzen die konkave oder zylinderförmige Ausnehmung 27 der Drückrolle 13. Indem diese Ausnehmung und auch eine Vertiefung 14 der Drückrolle, welche die Ausbildung des Außenflansches 16 bewirkt, unsymmetrisch ausgebildet sind, wird eine unsymmetrische Verdickung und Materialanhäufung in einem axial begrenzten Bereich möglich. Die asymmetrische Materialverdickung kann auch auf einer asymmetrisch konkaven Ausnehmung 27 beruhen, welche z.B.in Richtung zum innenflanschseitigen Vorsprung 49 eine größere Wölbung aufweisen kann als nahe dem außenflanschseitigen Vorsprung 33.

Während der asymmetrisch verdickte Metalltopf 7 gemäß Fig. 2 eine Wandstärke S1 aufweist, ist die Wandstärke des durchmesserreduzierten zylindrischen Bereiches 6 gemäß Fig. 3 auf eine Wandstärke S2 angewachsen.

Zusammen mit einer Materialbewegung in die zylinderförmige oder konkave Ausnehmung 27 der Drückrolle 13 erfolgt die Ausbildung des Außenflansches 16, welcher mit dem verdickten Endbereich 30 versehen ist. Eine Schrägstellung des Außenflansches 16 nach radial außen wird durch die entsprechend ausgebildete Spannfutterhälfte 10 ermöglicht und entspricht der Schrägstellung des Innenflansches 17 (siehe Fig. 4) in spiegelbildlicher Weise.

In Fig. 4 ist eine Vorprofilierung 8 des asymmetrisch verdickten zylindrischen Bereiches 6 nach Fig. 3 dargestellt. Die Vorprofilierung 8 wird mit einer Profilrolle 28 vorgenommen, welche die weitgehend konkave Materialverdickung 29 des zylindrischen Bereiches 6 gem. Fig. 3 radial zusammendrückt und im Zusammenwirken mit der Spannfutterhälfte 10 einen glattwandigen Innenmantel 18 formt. Gleichzeitig wird der Innenflansch 17 durch ein Zusammenwirken der Spannbackenhälfte 9 mit Spannbereich 39 und einer innenrandseitigen Vertiefung 36 der Profilrolle 28 gebildet.

Gemäß Fig. 5 erfolgt die Endprofilierung 3 mit einer zweiten Profilrolle 35, welche ebenfalls radial zugestellt wird und randseitig der Vorprofilierungsrolle 28 entspricht.

In Fig. 6 ist die Ausbildung einer Verzahnung 19 an dem Geber 4 gezeigt, welcher zuvor durch Flachdrücken des verdickten Endbereichs 30 des Außenflansches 16 umgeformt wurde.

## Patentansprüche

1. Verfahren zum Herstellen einer Poly-V-Scheibe mit einem integrierten, verzahnten Geber durch Drückumformen, bei dem
- eine topfförmige Vorform (7) mit einem radialen Nabenbereich (15) und einem zylindrischen Bereich (6) gebildet wird,
- anschließend an den zylindrischen Bereich (6) in einem axial begrenzten Teilabschnitt eine Drückrolle (13) radial zugestellt wird und dabei ein durchmesserreduzierter zylindrischer Bereich sowie gleichzeitig ein dazu durchmessergrößerer, zylindrischer Außenflansch (16) gebildet werden,
- in den durchmesserreduzierten zylindrischen Bereich ein Poly-V-Profil eingeformt wird und
- an dem Außenflansch (16) eine Verzahnung (19) ausgebildet wird,
dadurch **gekennzeichnet,**
- daß eine Metallronde (1) durch radiales Drücken zu der topfförmigen Vorform (7) mit wenigstens einer asymmetrischen Verstärkung (31) geformt wird und
- daß die asymmetrische Verstärkung (31) an dem zylindrischen Bereich (6) an einem Abschnitt ausgebildet wird, welcher anschließend zu dem durchmesserreduzierten zylindrischen Bereich geformt wird.

2. Verfahren nach Anspruch 1,
dadurch **gekennzeichnet,**
daß die topfförmige Vorform (7) aus einer angekippten Metallronde (1) umgeformt wird.

3. Verfahren nach Anspruch 2,
dadurch **gekennzeichnet,**
daß die angekippte Metallronde (1) durch Pressen vorgefertigt und nach Aufspannung in einer Druckmaschine zu der topfförmigen Vorform (7) umgeformt wird.

4. Verfahren nach Anspruch 2,
dadurch **gekennzeichnet,**
daß die angekippte Metallronde (1) in einer Drückmaschine aus einer Metallronde gebildet wird.

5. Verfahren nach Anspruch 1,
dadurch **gekennzeichnet,**
daß die topfförmige Vorform (7) mit dem asymmetrisch verstärkten zylindrischen Bereich (6) aus einer angestauchten Metallronde mit einem gestauchten Rondenrand und einem verdickten Endbereich umgeformt wird.

6. Verfahren nach einem der vorhergehenden Ansprüche, dadurch **gekennzeichnet,**
daß nach der axial begrenzten Durchmesserreduzierung zunächst eine Vorprofilierung (8) des verstärkten zylindrischen Bereichs (6) durchgeführt wird und gleichzeitig ein Innenflansch (17) vorgeformt wird.

7. Verfahren nach Anspruch 6,
dadurch **gekennzeichnet,**
daß nach der Vorprofilierung (8) eine Endprofilierung (3) vorgenommen wird und gleichzeitig die Endumformung des Innenflansches (17) erfolgt.

8. Verfahrenn nach einem der Ansprüche 1 bis 7, dadurch **gekennzeichnet,**
daß beim Formen des durchmesserreduzierten Bereiches eine asymmetrische Materialanhäufung durch radiales Zustellen einer Drückrolle (13) ausgebildet wird, welche eine konkave Ausnehmung (12) aufweist.

9. Drückmaschine zur Herstellung einer Poly-V-Scheibe mit einem integrierten, verzahnten Geber, insbesondere zur Durchführung des Verfahrens nach Anspruch 1, welche Spannfutterhälften (9, 10) zum Spannen einer topfförmigen Vorform (7) und nacheinander radial zustellbare Drück- bzw. Stauchrollen (11, 13) aufweist, die asymmetrisch ausgebildet sind, wobei zur Durchmesserreduzierung der Vorform (7) bei gleichzeitigem Ausbilden eines Außenflansches (16) für einen Geber (4) eine Drückrolle (13) vorgesehen ist, welche einen etwa zylinderförmigen Bereich und eine sich anschließende Vertiefung zur Ausbildung des Außenflansches (16) aufweist,
dadurch **gekennzeichnet,**
daß die Drückrolle (13) zur Ausformung einer asymmetrischen Materialanhäufung beim Durchmesserreduzieren an dem etwa zylinderförmigen Bereich mit einer konkaven Ausnehmung (27) versehen ist, welche sich zwischen einem innenflanschseitigem Randvorsprung (49) und einem außenflanschseitigen Randvorsprung (33) des zylinderförmigen Bereichs erstreckt.

10. Vorrichtung nach Anspruch 9,
dadurch **gekennzeichnet,**
daß eine zur Umformung einer angekippten Metallronde (1) in die topfförmige Vorform (7) eingesetzte asymmetrische Druckrolle (11) mit einer Ausformung (12), einer Vertiefung (47) und einem horizontalen Bereich (48) versehen ist und daß die Ausformung (12) mit der Spannfutterhälfte (9) zusammenwirkt, welche mit einem abgeschrägten Spannbereich (39) zur Ausbildung des Innenflansches (17) versehen ist.

11. Vorrichtung nach Anspruch 9,
dadurch **gekennzeichnet,**
daß die Drückrolle (13) eine Außenkontur ähnlich einer stilisierten "2", welche um 90° nach links umgelegt ist, aufweist.

## Claims

1. Method for the manufacture of a poly-V-pulley with an integrated, toothed reference mark sensor by spinning, by which
- a cup-shaped preform (7) with a radial hub region (15) and cylindrical area (6) is formed,
- subsequently, a spinning roll (13) is radially infed into the cylindrical area (6) in an axially limited partial section and thereby a diameter-reduced cylindrical area and simultaneously a cylindrical outer flange (16) with a larger diameter than the diameter-reduced cylindrical area are formed,
- into the diameter-reduced cylindrical area a poly-V-profile is formed and
- on the outer flange (16) a toothing is formed,
**characterized** in that
- a circular metal blank (1) is formed to the cup-shaped preform (7) with at least one asymmetrical thickening (31) by radial pressing and
- the asymmetrical thickening (31) is formed on the cylindrical area (6) in a section, which is subsequently formed to the diameter-reduced cylindrical area.

2. Method according to claim 1,
**characterized** in that
the cup-shaped preform (7) is formed from a tilted circular metal blank (1).

3. Method according to claim 2,
**characterized** in that
the tilted circular metal blank (1) is prefabricated by pressing and after fixing in a spinning machine is formed to a cup-shaped preform (7).

4. Method according to claim 2,
**characterized** in that
the tilted circular metal blank (1) is formed in a spinning machine from a circular metal blank.

5. Method according to claim 1,
**characterized** in that
the cup-shaped preform (7) with the asymmetrically thickened cylindrical area (6) is formed from an upset circular metal blank with an upset blank edge and a thickened terminal area.

6. Method according to one of the preceding claims, **characterized** in that
following the axially limited diameter reduction, firstly a preprofiling (8) takes place of the thickened cylindrical area (6) and simultaneously an inner flange (17) is preshaped.

7. Method according to claim 6,
**characterized** in that
after preprofiling (8) a final profiling (3) takes place, accompanied by the final shaping of the inner flange (17).

8. Method according to one of the claims 1 to 7,
**characterized** in that
at forming the diameter-reduced area an asymmetrical material thickening is formed by radial infeeding a spinning roll (13), which has a concave recess (12).

9. Spinning machine for the manufacture of a poly-V-pulley with an integrated, toothed reference mark sensor, particularly for performing the method according to claim 1,
which has chuck halves (9, 10) for clamping a cup-shaped preform (7) and which has subsequently radially infeedable spinning or upsetting rolls (11, 13), which are asymmetrical, wherein a spinning roll (13) is provided for reducing the diameter of the preform (7) at simultaneous forming an outer flange (16) for a reference mark sensor, wherein the spinning roll (13) has an approximately cylindrical area and a following depression for forming the outer flange (16),
**characterized** in that
for forming an asymmetrical material thickening at reducing the diameter at the approximately cylindrical area the spinning roll (13) is provided with a concave recess (27) extending between an inner flange-side projection (49) and an outer flange-side projection (33) of the cylindrical area.

10. Apparatus according to claim 9,
**characterized** in that
an asymmetrical spinning roll (11) used for forming the tilted circular metal blank (1) in the cup-shaped preform (7) is provided with a portion (12), a depression (47) and a horizontal area (48) and that the portion (12) cooperates with the chuck half (9), which is provided with a bevelled area (39) for forming the inner flange (17).

11. Apparatus according to claim 9,
**characterized** in that
the spinning roll (13) has an outer contour similar to a stylized "2", which is placed round by 90° to the left.

## Revendications

1. Procédé de fabrication d'une poulie à gorges multiples avec un manipulateur denté intégré par déformation plastique sous pression, dans lequel
- une préforme (7) en forme de pot est formée avec une zone de moyeu (15) et une zone cylindrique (6),
- à la suite de la section cylindrique (6) dans une section limitée axialement, un rouleau presseur (13) est approché radialement et une zone cylindrique de diamètre réduit, ainsi qu'une bride extérieure cylindrique (16) de plus grand diamètre, sont formées,
- dans la zone cylindrique de diamètre réduit, une poulie à gorges multiples est formée, et
- une dentelure (19) est formée sur la bride extérieure (16),
***caractérisé en ce que***
- un flan métallique (1) est formé par pression radiale contre la préforme (7) en forme de pot avec au moins un renfort asymétrique (31), et
- le renfort asymétrique (31) est formé sur la zone cylindrique (6) dans une zone qui est formée à la suite de la zone cylindrique de diamètre réduit.

2. Procédé selon la Revendication 1, ***caractérisé en ce que*** la préforme (7) en forme de pot est formée à partir d'un flan métallique (1) incliné.

3. Procédé selon la Revendication 2, ***caractérisé en ce que*** le flan métallique incliné (1) est préfabriqué par pressage et est transformé en préforme (7) en forme de pot après mise en place dans une presse.

4. Procédé selon la Revendication 2, ***caractérisé en ce que*** le flan métallique incliné (1) est formé à partir d'un flan métallique dans une presse.

5. Procédé selon la Revendication 1, ***caractérisé en ce que*** la préforme (7) en forme de pot avec la zone renforcée asymétriquement (6) est formée à partir d'un flan métallique refoulé avec un bord de flan foulé et une zone d'extrémité épaissie.

6. Procédé selon l'une quelconque des Revendications précédentes, ***caractérisé en ce qu***'après la réduction de diamètre limitée axialement, on procède d'abord à un pré-profilage (8) de la zone cylindrique renforcée (6) et une bride intérieure (17) est préformée simultanément.

7. Procédé selon la Revendication 6, ***caractérisé en ce qu***'après le pré-profilage (8), un profilage final (3) est effectué et la formation finale de la bride intérieure (17) s'effectue simultanément.

8. Procédé selon l'une quelconque des Revendications 1 à 7, ***caractérisé en ce que***, lors de la formation de la zone de diamètre réduit, une accumulation asymétrique de matière est formée par rapprochement radial d'un rouleau presseur (13), qui présente un évidemment concave (12).

9. Presse pour fabriquer une poulie à gorges multiples avec un manipulateur denté intégré, en particulier pour appliquer le procédé de la Revendication 1, qui présente des moitiés (9, 10) de mandrin de serrage pour serrer une préforme (7) en forme de pot, et successivement des rouleaux de pressage ou de foulage (11, 13) réglables radialement, qui sont conformés de manière asymétrique, un rouleau presseur (13) étant prévu pour la réduction de diamètre de la préforme (7) avec formation simultanée d'une bride extérieure (16) pour un manipulateur (4), rouleau qui présente une zone approximativement cylindrique et un renfoncement lui faisant suite pour former la bride extérieure (16),
***caractérisée en ce que*** le rouleau presseur (13), pour former une accumulation asymétrique de matière lors de la réduction de diamètre de la zone approximativement cylindrique, est muni d'un évidement concave (27) qui s'étend entre une saillie de bord (49) côté bride intérieure et une saillie de bord (33) côté bride extérieure de la zone cylindrique.

10. Dispositif selon la Revendication 9, ***caractérisé en ce qu***'un rouleau de pressage (11) asymétrique utilisé pour transformer un flan métallique incliné (1) en la préforme (7) en forme de pot est muni d'une formation (12), d'un renfoncement (47) et d'une zone horizontale (48) et ***en ce que*** la formation (12) coopère avec la moitié de mandrin de serrage (9) qui est munie d'une zone de serrage inclinée (39) pour former la bride intérieure (17).

11. Dispositif selon la Revendication 9, ***caractérisé en ce que*** le rouleau presseur (13) présente un contour extérieur semblable à un "2" stylisé basculé de 90° vers la gauche.
